(19) Europäisches Patentamt / European Patent Office / Office européen des brevets

(11) **EP 1 503 889 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(21) Anmeldenummer: 03725119.6

(22) Anmeldetag: **30.04.2003**

(51) Int Cl.:
***B29C 44/34*** *(2006.01)*    ***C08J 9/12*** *(2006.01)*

(86) Internationale Anmeldenummer:
**PCT/EP2003/004500**

(87) Internationale Veröffentlichungsnummer:
**WO 2003/092982 (13.11.2003 Gazette 2003/46)**

(54) **VERFAHREN ZUR HERSTELLUNG GESCH UMTER POLYMERFORMK RPER UND GESCH UMTER POLYMERFORMK RPER**

METHOD FOR PRODUCING FOAMED POLYMER MOULDED BODIES AND FOAMED POLYMER MOULDED BODIES

PROCEDE POUR PRODUIRE UN CORPS POLYMERE MOULE EXPANSE ET CORPS POLYMERE MOULE EXPANSE

(84) Benannte Vertragsstaaten:
**AT BE BG CH CY CZ DE DK EE ES FI FR GB GR HU IE IT LI LU MC NL PT RO SE SI SK TR**

(30) Priorität: **04.05.2002 DE 10220038**

(43) Veröffentlichungstag der Anmeldung:
**09.02.2005 Patentblatt 2005/06**

(73) Patentinhaber: **Membrana GmbH**
**42289 Wuppertal (DE)**

(72) Erfinder:
• **WIESE, Frank**
**42289 Wuppertal (DE)**
• **STENZEL, Hartmut**
**63785 Obernburg (DE)**
• **HUANG, Quan**
**63785 Obernburg (DE)**
• **SEIBIG, Bernd**
**21502 Geesthacht (DE)**
• **PAUL, Dieter**
**14532 Kleinmachnow (DE)**

(74) Vertreter: **Schröder, Richard et al**
**CPW GmbH**
**Kasinostrasse 19-21**
**42103 Wuppertal (DE)**

(56) Entgegenhaltungen:
EP-A- 0 297 744     WO-A-00/26006
DE-A- 4 437 860     GB-A- 2 178 447

EP 1 503 889 B1

**Beschreibung**

Die Erfindung betrifft ein Verfahren gemäß dem Oberbegriff des Anspruchs 1 zur Herstellung geschäumter, offenzelliger mikroporöser Polymerformkörper aus mindestens einem thermoplastischen Polymer sowie mikroporöse geschäumte Polymerpartikeln mit offenzelliger Porenstruktur aus mindestens einem thermoplastischen Polymer.

Ein gattungsgemäßer Verfahren ist aus der WO-A-9 938 604 bekannt.

Mikroporöse Polymerformkörper finden vielfache Anwendung, wobei nach der Form der eingesetzten Polymerformkörper zu unterscheiden ist. Ein weites Einsatzgebiet mikroporöser Polymerformkörper in Partikelform ist die Masterbatchtechnik. Hierfür werden offenporige poröse Polymerpartikel mit flüssigen Additiven oder auch mit festen Additiven, die in Flüssigkeiten löslich sind, beladen. Als solche Additive können z.B. Flammschutzmittel, Antioxidationsmittel, Antistatika oder Weichmacher genannt werden. Die beladenen Polymerpartikel werden dann in der Anwendung z.B. als Additivmasterbatch einem Basispolymer zugemischt, wodurch eine homogene Verteilung der Additive auch in sehr geringer Konzentration im Basispolymer erreicht werden kann. Eine weitere Anwendung sind mit Wirkstoffen beladene poröse Polymerpartikel, bei denen in die poröse Struktur der Partikel Wirkstoffe wie z.B. Duftstoffe oder pharmazeutische Wirkstoffe, also z.B. Arzneimittel eingebracht werden, die in der Anwendung in langsamer und kontrollierter Weise an die Umgebung abgegeben werden. Bei diesen Anwendungen spielt die Beladungsfähigkeit der porösen Polymerpartikel eine große Rolle. So werden z.T. Beladungen mit Additiv bzw. Wirkstoff von bis zu 70 Gew.-%, bezogen auf das Gesamtgewicht aus Polymer und Additiv bzw. Wirkstoff, gefordert. Hierzu ist u.a. eine hohe Porosität der Polymerpartikel erforderlich. Gleichzeitig müssen die Polymerpartikel eine genügende Stabilität aufweisen, d.h. eine möglichst geringe Kompressibilität, da ansonsten bei der Lagerung der mit Additiven oder Wirkstoffen beladenen Partikel z.B. in Behältern oder Säcken die Additive bzw. Wirkstoffe aus den Partikeln austreten können.

Schließlich können poröse Polymerpartikel auch wegen ihrer großen inneren Oberfläche genutzt werden, um Flüssigkeiten zu absorbieren, beispielsweise zur Abscheidung von Ölen aus Wasser.

Aus der EP-A-0 297 744 sind geschäumte offenzellige mikroporöse Polymerpartikel bekannt, deren mittlere Zellengröße unter 10 μm liegt und deren Porosität zwischen 0.5 und 0.95, bevorzugt zwischen 0.7 und 0.9, liegt.

Mikroporöse Polymerformkörper in Gestalt von Hohlfasermembranen oder Flachmembranen finden vielfältige Anwendung in der Filtration von Fluiden, insbesondere im Bereich der Ultrafiltration oder der Mikrofiltration. Hierbei werden hohe Porositäten angestrebt, da andernfalls die erzielbaren Durchsätze durch die Membranen zu gering sind. Andererseits sind die maximal einstellbaren Porositäten oftmals nach oben begrenzt, da die Membranen für Verarbeitung und Anwendung eine Mindestfestigkeit aufweisen müssen.

Es sind verschiedene Verfahren zur Herstellung von mikroporösen Polymerformkörpern bekannt. So wird in der DE 27 37 745 C2 ein Verfahren zur Herstellung von mikroporösen Polymerformkörpern beschrieben, das auf einem Prozess mit einer thermisch induzierten Phasentrennung beruht. Bei diesem Verfahren wird zunächst bei erhöhten Temperaturen eine homogene Lösung einer Polymerkomponente in einem geeigneten Lösemittelsystem hergestellt. Dabei bilden die Polymerkomponente und das Lösemittelsystem ein binäres System, das im flüssigen Aggregatzustand einen Bereich aufweist, in dem es als homogene Lösung vorliegt, und einen Bereich, in dem es eine Mischungslücke besitzt. Bei Abkühlung eines solchen Systems unter die Entmischungstemperatur kommt es zur Phasentrennung und schließlich zur Ausbildung einer porösen Polymerstruktur. Derartige Verfahren zu Herstellung von Membranen werden beispielsweise auch in der DE-A-32 05 289 oder der EP-A-0 133 882 beschrieben.

Ein weiteres Verfahren zur Herstellung poröser Polymerpartikel wird in der WO 98/55540 beschrieben. Bei dem Verfahren gemäß der WO 98/55540 wird ein Polyolefin-Polymer in einem Lösemittel gelöst und die Lösung bei einer Temperatur oberhalb der Kristallisationstemperatur des Polyolefins in einem Nichtlöser für das Polyolefin unter Bildung eines Mehrphasensystems dispergiert. Unter Abkühlung der Dispersion werden poröse Polyolefinpartikel erhalten.

Nach diesen bekannten Verfahren lassen sich Polymerformkörper mit einer hohen Porosität und einer offenporigen Struktur sowie einer hohen Beladungsfähigkeit herstellen. Die genannten Verfahren zu ihrer Herstellung weisen jedoch als Nachteil auf, dass wegen der dort erforderlichen Verwendung von Lösemitteln aufwendige Extraktions- und/oder Trocknungsprozesse zur Entfernung dieser Lösemittel erforderlich sind. Trotz dieser aufwendigen Extraktion und/oder Trocknung lässt sich jedoch eine vollständige Entfernung der Lösemittel aus den erhaltenen Polymerformkörpern in der Regel nicht erreichen, wodurch sich bei der Verwendung solcher Polymerformkörper für Anwendungen z.B. im medizinischen Bereich oder im Bereich der Lebensmitteltechnologie oder auch der Elektroindustrie Einschränkungen ergeben können.

Es wurde auch vorgeschlagen, poröse Polymerformkörper durch Entspannen einer unter Druck stehenden Schmelze eines thermoplastischen Polymers und eines darin befindlichen flüchtigen Treibmittels herzustellen. So beschreibt die US-A-5 160 674 ein Verfahren zur Herstellung von geschäumten Materialien aus teilkristallinen Polymeren, bei dem eine Schmelze des eingesetzten Polymers bei erhöhtem Druck mit einem Gas gesättigt und unter erhöhtem Druck ausgeformt wird, und nach Austritt aus dem Formwerkzeug durch eine beim Austritt auftretende Druckreduzierung eine Schäumung des Polymermaterials bewirkt wird. Die nach dem Verfahren der US-A-5 160 674 hergestellten geschäumten Materialien weisen eine gleichförmige poröse Struktur auf, wobei die Poren bzw. Zellen jedoch geschlossen sind. Derartige geschlossenzellige Materialien lassen sich jedoch nicht mit Additiven oder Wirkstoffen beladen und sind auch als Membranen ungeeignet, da sie keinen oder bestenfalls einen sehr geringen Durchfluss für ein zu filtrierendes Fluid aufweisen.

Aus der DE-A 44 37 860 ist ein Verfahren zur Herstellung von bahnförmigen mikrozellulären Schaumstoffen aus amorphen thermoplastischen Polymeren wie z.B. Polystyrol bekannt, bei dem eine Schmelze des thermoplastischen Polymers mit einem flüchtigen Treibmittel in einer ersten Extrusionszone imprägniert wird und in einer zweiten Extrusionszone die treibmittelhaltige Schmelze um mindestens 40°C auf eine Temperatur abgekühlt wird, die mindestens 30°C oberhalb der Glastemperatur des treibmittelhaltigen Polymers liegt. Durch anschließendes Entspannen auf Normaldruck und Abkühlung auf Raumtemperatur expandiert und verfestigt sich die Schmelze zu einer Schaumstoffbahn.

In der WO 00/26006 wird ein Verfahren zur Herstellung von mikrozellulären Schäumen aus Polymeren oder Polymergemischen für die Ausbildung von Formkörpern wie z.B. Hohlfaser- oder Flachmembranen beschrieben. Hierbei wird in einer ersten Extrusionszone eine Polymerschmelze unter Einwirkung eines Scher- und/oder Knetmittels mit einem druckerhöhten Gas beaufschlagt und in einer zweiten Extrusionszone durch Druckerhöhung eine Verbesserung der Löslichkeit des Gases in der gasbeaufschlagten Schmelze und damit eine Verbesserung der Schaumbildung erreicht. Die nach der Extrusion durch eine Düse infolge Druckentspannung erhaltenen geschäumten Formkörper können je nach Einstellung der Verfahrensbedingungen eine offenzellige oder geschlossenzellige Struktur aufweisen, wobei die mittlere Zellgröße gemäß dem offenbarten Beispiel im Bereich von ca. 10 $\mu$m liegt. Nach dem in der WO 00/26006 beschriebenen Verfahren werden Schäume erhalten, die eine hohe Porosität aufweisen im Bereich von größer als 90 Vol.-%. Derartige Schaumstrukturen sind jedoch wegen ihrer geringen mechanischen Stabilität für viele Anwendungen nicht einsetzbar.

Die WO 99/38604 offenbart geschäumte poröse Membranen aus thermoplastischen Polymeren sowie ein Verfahren zu ihrer Herstellung. Die Membranen gemäß der WO 99/38604 weisen mittlere Porendurchmesser zwischen 0,05 und 30 $\mu$m, eine Porosität von mindestens 75 Vol.-% sowie eine Offenzelligkeit von mindestens 80% auf. Sie werden über ein Verfahren hergestellt, bei dem eine Polymerschmelze aus mindestens einem Polymer unter Druck durch eine Extrusionseinrichtung gefördert und in einer Injektionsstufe mit einem Zellbildner beladen wird. Der Druck in diesem Teil der Extrusionseinrichtung wird auf mindestens 150 bar und die Temperatur so auf eine Temperatur oberhalb der Glasübergangs- bzw. Schmelztemperatur eingestellt, dass ein einwandfreies Arbeiten der Extrusionseinrichtung gewährleistet ist. In einer nachgeschalteten Mischstufe wird eine einphasige Schmelze aus dem mindestens einen Polymer und dem Zellbildner erzeugt, wobei die Temperatur der Schmelze in der Mischstufe auf eine Temperatur unterhalb der Arbeitstemperatur im vorherigen Teil der Extrusionseinrichtung gesenkt und/oder der Druck erhöht wird. Die einphasige Schmelze wird zur Ausformung der Membran durch eine Düse extrudiert, wobei der Zellbildner aufgrund des dabei resultierenden Druckabfalls die Polymerschmelze aufschäumt. Zur Erzielung der gewünschten Offenporigkeit bestehen gemäß der WO 99/38604 die Zellbildner aus mindestens zwei Komponenten, wobei als Komponenten Gase und/oder niedrig siedende Flüssigkeiten eingesetzt werden und die Komponenten unterschiedliche Diffusionsgeschwindigkeiten gegenüber der Polymerschmelze aufweisen müssen.

Der hohe Grad an Offenzelligkeit wird gemäß der WO 99/38604 auf ein Aufbrechen von zunächst geschlossenen Zellen zurückgeführt, da offenbar das Treibmittel mit der geringeren Diffusionsgeschwindigkeit zu einem starken inneren Zelldruck führt, wodurch die wegen der gleichzeitig geforderten hohen Porosität sehr dünnen Zellwände reißen. Hieraus ergibt sich, dass das Verfahren gemäß der WO 99/38604 zur Erzeugung von Schaumstrukturen mit geringeren Porositäten höchstens in eingeschränktem Maße einsetzbar ist. Darüber hinaus sind dem Verfahren wegen des Erfordernisses, dass der Zellbildner aus mindestens zwei Komponenten mit unterschiedlichen Diffusionsgeschwindigkeiten gegenüber der Polymerschmelze bestehen muss, hinsichtlich seiner Anwendbarkeit Grenzen gesetzt.

Es ist daher Aufgabe der vorliegenden Erfindung, ein Verfahren zur Verfügung zu stellen, mittels dessen sich mikroporöse Polymerformkörper beispielsweise in Form von Partikeln oder Membranen unter Vermeidung aufwendiger Extraktionsverfahren kostengünstig herstellen lassen, wobei die Polymerformkörper eine gleichmäßige Porenstruktur, eine geringe Kompressibilität und eine hohe Offenzelligkeit aufweisen sollen.

Des Weiteren ist Aufgabe der vorliegenden Erfindung, mikroporöse Polymerformkörper in Gestalt von Partikeln zur Verfügung zu stellen, die zur Beladung mit Additiven oder Wirkstoffen geeignet sind und eine gleichmäßige Porenstruktur, eine geringe Kompressibilität und eine hohe Offenzelligkeit aufweisen sollen.

Die Aufgabe wird zum einen durch ein Verfahren zur Herstellung geschäumter mikroporöser Polymerformkörper aus mindestens einem thermoplastischen Polymer gelöst, welches die Schritte umfasst:

a. Aufschmelzen des mindestens einen thermoplastischen Polymers bei einer ersten Temperatur in einer ersten Zone einer Extrusionseinrichtung und Einleitung eines gegenüber der so hergestellten Polymerschmelze druckerhöhten, leichtflüchtigen Treibmittels in die erste Zone der Extrusionseinrichtung,

b. Beaufschlagung der Polymerschmelze in der ersten Zone der Extrusionseinrichtung mit dem Treibmittel und Einmischen des Treibmittels in die Polymerschmelze unter Einwirkung eines Scher- und/oder Knetmittels auf die Polymerschmelze, wobei gleichzeitig ein zumindest teilweises Lösen des Treibmittels in der Polymerschmelze erfolgt,

c. Förderung der mit dem Treibmittel beaufschlagten Polymerschmelze mittels eines mit einem Druckregulierorgan gekoppelten Förderorgans durch eine sich an die erste Zone anschließende zweite Zone der Extrusionseinrichtung zu einem am Ende der zweiten Zone angeordneten Formwerkzeug, wobei die Temperatur in der zweiten Zone auf eine zweite, als Schäumungstemperatur bezeichnete Temperatur eingestellt wird, die gleich der ersten Temperatur oder kleiner als diese ist, wobei in der zweiten Zone ein Lösen des Treibmittels bis zur Sättigung der Polymerschmelze erfolgt,

d. Ausformung der Polymerschmelze im Formwerkzeug und anschließendes Schäumen der ausgeformten Polymerschmelze bei Austritt der mit Treibmittel beladenen Polymerschmelze aus dem Formwerkzeug zu einer Schaumstruktur aufgrund des in der Polymerschmelze enthaltenen Treibmittels,

e. Abkühlung der Schaumstruktur bis zu ihrer Erstarrung,

wobei in der zweiten Zone der Extrusionseinrichtung ein Druck oberhalb eines Mindestdrucks $p_{min}$ von 90 bar eingestellt wird und die in der zweiten Zone der Extrusionseinrichtung hergestellte, mit Treibmittel beladene Polymerschmelze eine Erstarrungstemperatur aufweist, dadurch gekennzeichnet, dass eine Treibmittelkonzentration eingestellt wird, die mindestens so groß wie die kritische Mindestkonzentration für eine Vollverschäumung ist, und dass die Schäumungstemperatur so auf eine Temperatur oberhalb der Erstarrungstemperatur eingestellt wird, dass der erhaltene poröse Polymerformkörper eine Porosität im Bereich zwischen 40 und 90 Vol.-% und eine gleichmäßig über den Querschnitt verteilte offenzellige Porenstruktur aufweist.

Während die Verfahren des Stands der Technik vornehmlich nur bei sehr hohen Porositäten zu zufriedenstellenden Ergebnissen führen, ist es mittels des erfindungsgemäßen Verfahrens unter Einhaltung der Kombination der erfindungsgemäßen Merkmale möglich, Porositäten über den gesamten Bereich zwischen 40 und 90 Vol.-% gezielt einzustellen. Hierdurch werden Polymerformkörper mit einer hohen Offenzelligkeit und gleichzeitig einer hohen mechanischen Stabilität erhalten. Vorzugsweise wird die Schäumungstemperatur zur Herstellung der erfindungsgemäß geforderten Polymerformkörper auf eine Temperatur eingestellt, die maximal bis zu 30 % höher als die Erstarrungstemperatur ist, und besonders bevorzugt auf eine Temperatur, die 10 bis 30 % höher als die Erstarrungstemperatur ist.

In einen vorteilhaften Ausgestaltung des erfindungsgemäßen Verfahrens wird die Schäumungstemperatur auf eine Temperatur eingestellt, die 10 bis 30 % höher als die Erstarrungstemperatur ist.

Das erfindungsgemäße Verfahren lässt sich vorzugsweise zur Herstellung von Polymerformkörpern mit einer Porosität im Bereich zwischen 40 und 85 Vol.-% einsetzen. In besonderer Weise ist das erfindungsgemäße Verfahren geeignet, Polymerformkörper mit einer Porosität im Bereich von 50 bis 80 Vol.-% herzustellen. Vorzugsweise wird hierzu die Schäumungstemperatur auf eine Temperatur eingestellt, die 10 bis 20 % höher als die Erstarrungstemperatur ist. Besonders bevorzugt wird die Schäumungstemperatur so eingestellt, dass poröse Polymerformkörper mit einer Porosität zwischen 60 und 75 Vol.-% erhalten werden. Darüber hinaus ist bei dem erfindungsgemäßen Verfahren keine in der Regel aufwendige Extraktion der erhaltenen Formkörper erforderlich, um z.B. Restlösemittel zu entfernen, wodurch mittels des erfindungsgemäßen Verfahrens eine vergleichsweise kostengünstige Herstellung von mikroporösen Polymerformkörpern möglich ist.

Im Zusammenhang mit der Erfindung wurde festgestellt, dass bei Auftragung der Erstarrungstemperatur der Polymerschmelze bzw. der treibmittelhaltigen Polymerschmelze über der in der Polymerschmelze enthaltenen Treibmittelkonzentration sich zwei Konzentrationsbereiche unterscheiden lassen. Hierbei wird unter der Erstarrungstemperatur der mit Treibmittel angereicherten bzw. beladenen Polymerschmelze diejenige Temperatur bezeichnet, bei der gerade ein einwandfreies Arbeiten der Extrusionseinrichtung in deren zweiter Zone und im Formwerkzeug gewährleistet ist. Unterhalb der Erstarrungstemperatur beginnt die Schmelze zu erstarren und kann nicht mehr aus dem Formwerkzeug austreten. Ein beginnender Verschluss des Formwerkzeugs kann anhand eines exponentiell ansteigenden Drucks in der zweiten Zone der Extrusionseinrichtung festgestellt werden. Sobald ein Verschluss erfolgt ist, kann dieser nicht über einen erhöhten Druck, sondern allein über eine erhebliche Temperaturerhöhung im zweiten Teil der Extrusionseinrichtung aufgehoben werden. Die Erstarrungstemperatur hängt dabei vom verwendeten Polymertyp und von seiner Molmasse bzw. seinem Schmelzindex sowie vom Gehalt des gelösten Treibmittels in der Schmelze ab.

Mit zunehmender Treibmittelkonzentration nimmt die Erstarrungstemperatur in einem ersten Konzentrationsbereich zunächst monoton und im wesentlichen linear ab und wird dann in einem zweiten Konzentrationsbereich bei höheren Treibmittelkonzentrationen konstant und von der Treibmittelkonzentration unabhängig. Aus dem Schnittpunkt der die beiden Bereiche approximierenden Geraden ergibt sich eine kritische Treibmittelkonzentration. Hierbei wurde beobachtet, dass bei Treibmittelkonzentrationen unterhalb dieser kritischen Treibmittelkonzentration Polymerformkörper erhalten werden, die eine inhomogene Verteilung der Zellen aufweisen mit z.T. nicht-porösen Bereichen und Makroporen bzw. Lunkern sowie eine unzureichende Porosität. In einem Konzentrationsbereich oberhalb der kritischen Treibmittelkonzentration lässt sich hingegen eine Vollverschäumung der Polymerformkörper erreichen. Dabei ist im Rahmen der vorliegenden Erfindung als Vollverschäumung eine Verschäumung zu verstehen, bei der der Polymerformkörper eine Porosität von mindestens 95 Vol.-% bei gleichzeitig homogener Verteilung der Poren bzw. Zellen aufweist. Eine homogene Porenverteilung ist dann gegeben, wenn eine gleichmäßige Porenstruktur vorliegt, die keine Makroporen oder Lunker aufweist bzw. bei der der Durchmesser der größten Poren maximal um den Faktor 10 vom mittleren Porendurchmesser abweicht. Die kritische Treibmittelkonzentration entspricht also der kritischen Mindestkonzentration für eine Vollverschäumung.

Es wurde nun gefunden, dass im erfindungsgemäßen Verfahren die Treibmittelkonzentration, d.h. die auf die Schmelze des mindestens einen Polymers bezogene Konzentration des in der ersten Zone der Extrusionseinrichtung eingeleiteten Treibmittels, auf einen Wert eingestellt werden muss, der mindestens so groß wie die kritische Mindestkonzentration für eine Vollverschäumung ist. Hierdurch wird auch die erfindungsgemäß geforderte Offenzelligkeit der erhaltenen Polymerformkörper erreicht. Auf der anderen Seite ist auch die Einstellung einer zu hohen Treibmittelkonzentration nicht zweckmäßig. Bei deutlich zu hohen Treibmittelkonzentrationen kann nicht mehr das gesamte Treibmittel in der Schmelze gelöst werden. In diesen Fällen kann es zu einem Entweichen größerer nicht gelöster Treibmittelmengen aus dem Formwerkzeug kommen, zum anderen können auch größere Zonen ungelösten Treibmittels in der Schmelze zu einer Ausbildung von Makroporen führen. Vorzugsweise liegt daher die Treibmittelkonzentration maximal um bis zu 5 Gew.-% und besonders bevorzugt maximal um bis zu 3 Gew.-% oberhalb der kritischen Treibmittelkonzentration, d.h. oberhalb der Mindestkonzentration für eine Vollverschäumung.

Bei dem erfindungsgemäßen Verfahren wird in der ersten Zone der Extrusionseinrichtung zunächst eine Schmelze aus dem in die Extrusionseinrichtung eingeführten mindestens einen thermoplastischen Polymer hergestellt und diese Schmelze unter Druck durch die Extrusionseinrichtung gefördert. Die Einleitung des leichtflüchtigen Treibmittels in die Polymerschmelze erfolgt bevorzugt unter einem Druck, der höher als der Druck in der ersten Zone der Extrusionseinrichtung ist, und vorteilhafterweise mit einer Temperatur oberhalb der Glasübergangs- bzw. Schmelztemperatur des mindestens einen Polymers in der ersten Zone der Extrusionseinrichtung. Die Einleitung des Treibmittels kann z.B. in einer Injektionsstufe beispielsweise über ein Sintermetall erfolgen, um so eine gute Verteilung des Treibmittels in der Polymerschmelze zu bewirken. Vorzugsweise wird das Treibmittel mit einem Druck von mehr als 150 bar eingeleitet. Die Beaufschlagung der Polymerschmelze mit dem eingeleiteten Treibmittel bzw. das Einmischen des Treibmittels in die Polymerschmelze erfolgt unter der Einwirkung eines Scher- oder Knetmittels auf die Polymerschmelze. Dabei wird die Temperatur in diesem Bereich der Extrusionseinrichtung bevorzugt so gewählt, dass unmittelbar nach Einleitung des Treibmittels die weitere Behandlung der treibmittelbeaufschlagten Polymerschmelze unter Beibehaltung der Temperatur der Schmelze des reinen mindestens einen Polymers oder bei gegenüber dieser reduzierten Temperaturen erfolgt. Hierbei wird bereits ein Teil des Treibmittels in der Polymerschmelze gelöst.

Die im Rahmen des erfindungsgemäßen Verfahrens verwendeten leichtflüchtigen Treibmittel sollen sich gegenüber dem verwendeten mindestens einen Polymer zumindest weitgehend inert verhalten. Dabei kann es sich bei dem leichtflüchtigen Treibmittel um niedrigsiedende Flüssigkeiten oder um Gase handeln. Es ist auch möglich, Mischungen verschiedener niedrigsiedender Flüssigkeiten, Mischungen verschiedener Gase oder auch Mischungen z.B. einer niedrigsiedenden Flüssigkeit mit einem Gas einzusetzen, wie dies beispielsweise in der WO 99/38604 beschrieben wird. Als niedrigsiedende Flüssigkeiten können z.B. Wasser, Pentan oder auch niedrigsiedende Alkohole verwendet werden. Geeignete Gase sind z.B. Ethan, Propan, Butan, Stickstoff oder Kohlendioxid. Bevorzugt wird Kohlendioxid verwendet.

Das erfindungsgemäße Verfahren lässt sich für amorphe und teilkristalline thermoplastische Polymere einsetzen. Geeignete Polymere sind insbesondere Polyolefine; Polyester, Sulfon-Polymere wie z.B. Polysulfon oder Polyethersulfon, Polyamide oder Polycarbonate sowie Modifikationen, Blends, Mischungen oder Copolymere dieser Polymeren. Bevorzugt werden im erfindungsgemäßen Verfahren Polyolefine wie z.B. Polyethylen, Polypropylen, Polybutylen oder Poly(4-methyl-1-penten) und besonders bevorzugt Polypropylen eingesetzt.

Die mit dem Treibmittel beaufschlagte Polymerschmelze wird über ein mit einem Druckregulierorgan gekoppeltes Förderorgan z.B. in Gestalt einer Zahnradpumpe oder eines zweiten Extruders in die zweite Zone der Extrusionseinrichtung gefördert. Diese zweite Zone der Extrusionseinrichtung ist vorzugsweise als zusätzliche Mischstufe ausgebildet. In einer bevorzugten Ausführung ist die zweite Zone ein beheizbarer und gegebenenfalls auch kühlbarer rohrförmiger Extruderkopf, der in einer besonders bevorzugten Ausführungsform mit Mischerelementen z.B. in Gestalt statischer Mischer ausgerüstet ist. In der zweiten Zone der Extrusionseinrichtung soll eine Sättigung der Polymerschmelze mit dem Treibmittel und ein möglichst vollständiges Lösen des Treibmittels in der Polymerschmelze erreicht werden. Es ist daher von Vorteil, wenn die mit Treibmittel beaufschlagte Polymerschmelze in der zweiten Zone durch Mischelemente, bevorzugt in Form statischer Mischer, gemischt wird.

Auf diese Weise werden geschäumte Polymerformkörper erhalten, die ein hohes Maß an Homogenität aufweisen. Am Ende der zweiten Zone kann vor dem Formwerkzeug auch eine weiteres Druckregulierorgan wie z.B. eine weitere Zahnradschmelzepumpe angeordnet sein, um so den Druck in der zweiten Zone der Extrusionseinrichtung flexibel einstellen zu können.

Durch die Aufteilung der Extrusionsstrecke in eine erste und eine von der ersten Zone entkoppelte zweite Zone können Temperaturen und Drücke in den Zonen auf die jeweiligen Erfordernisse des Prozesses unabhängig voneinander eingestellt werden. Damit ist es möglich, die Temperatur in der zweiten Zone, d.h. die Schäumungstemperatur, gegenüber derjenigen in der ersten Zone abzusenken und/ oder den Druck in der zweiten Zone gegenüber demjenigen in der ersten Zone zu erhöhen. Dies ist von Vorteil, da bei geringeren Temperaturen und höheren Drücken ein höherer Gehalt an Treibmittel in die Schmelze eingebracht werden kann, ohne dass nicht gelöstes Treibmittel in der Schmelze zurückbleibt. Eine Absenkung der Temperatur der treibmittelbeaufschlagten Schmelze und/oder eine Erhöhung des Drucks in der zweiten Zone der Extrusionseinrichtung erlaubt es, in der ersten Zone mehr an Treibmittel in die Polymerschmelze einzuleiten, als bei den dort herrschenden Bedingungen in ihr gelöst werden kann, weil der Überschuss nachträglich während der Behandlung in der zweiten Zone der Extrusionseinrichtung in Lösung gebracht wird. Dabei kann der Effekt ausgenutzt werden, dass mit steigendem Treibmittelgehalt die Erweichungs- oder Schmelztemperatur der mit Treibmittel beaufschlagten Polymerschmelze niedriger wird bzw. bei gleicher Temperatur die Viskosität der Schmelze abnimmt. Daher kann die Verarbeitungs- bzw. Schäumungstemperatur in der zweiten Zone der Extrusionseinrichtung gegenüber der Temperatur in der ersten Zone abgesenkt werden, ohne dass die Viskosität ansteigt. Gemäß einem Aspekt der Erfindung ist die Schäumungstemperatur jedoch auf einen Wert einzustellen, der 10 bis 30 % und bevorzugt 10 bis 20 % höher als die Erstarrungstemperatur der mit Treibmittel beaufschlagten Polymerschmelze in der zweiten Zone ist.

Bevorzugt wird der Druck in der zweiten Zone der Extrusionseinrichtung gegenüber demjenigen in der ersten Zone erhöht. Erfindungsgemäß muss der Druck in der zweiten Zone mindestens 90 bar betragen, bevorzugt wird er auf Werte oberhalb 120 bar und besonders bevorzugt auf Werte oberhalb 200 bar eingestellt. Hierdurch wird gleichzeitig eine stabile Prozessführung ermöglicht.

Nach Durchlaufen der zweiten Zone der Extrusionseinrichtung wird die treibmittelbeladene Polymerschmelze in einem sich an die zweite Zone anschließenden Formwerkzeug ausgeformt und nach Verlassen des Formwerkzeugs aufgrund der Entspannung auf einen reduzierten Druck, typischerweise auf Normaldruck, zur Schaumstruktur geschäumt. Es ist von Vorteil, wenn die Temperatur des Formwerkzeugs unabhängig von der Temperatur in der zweiten Zone der Extrusionsvorrichtung einstellbar ist. Bevorzugt wird das Formwerkzeug auf eine unabhängig von der Schäumungstemperatur einstellbare Formwerkzeugtemperatur temperiert; die oberhalb der Schäumungstemperatur liegt. Besonders bevorzugt ist die Formwerkzeugtemperatur bis zu 20% höher als die Schäumungstemperatur. Hierdurch kann Einfluss auf die Porosität genommen werden in Richtung einer Reduzierung der Porosität gegenüber einem Polymerformkörper, bei dessen Herstellung Schäumungstemperatur und Werkzeugtemperatur gleich waren.

Je nach verwendetem Formwerkzeug können Schaumstrukturen und letztlich Polymerformkörper in verschiedener Gestalt hergestellt werden. In bevorzugten Ausgestaltungen werden mittels des erfindungsgemäßen Verfahrens geschäumte Polymerformkörper in Gestalt eines Vollfadens, eines Hohlfadens oder einer Flachfolie hergestellt. Bei den geschäumten Polymerformkörpern in Gestalt eines Hohlfadens oder in Gestalt einer Flachfolie handelt es sich besonders bevorzugt um eine Hohlfadenmembran bzw. um eine Flachmembran. Für den Fall, dass ein Hohlfaden bzw. eine Hohlfadenmembran hergestellt werden, wird die mit Treibmittel beaufschlagte Polymerschmelze durch ein als Hohlfadendüse ausgebildetes Formwerkzeug mit einer zentralen Kapillaren extrudiert, wobei durch die Innenbohrung der Kapillaren beispielsweise ein Gas als Lumenfüller dosiert wird, um den Hohlraum des entstehenden Hohlfadens auszubilden und zu stabilisieren.

In einer ebenfalls bevorzugten Ausgestaltung des erfindungsgemäßen Verfahrens wird die Schaumstruktur in einen weiteren Verfahrensschritt zu Polymerformkörpern in Gestalt von geschäumten Polymerpartikeln zerkleinert. Vorzugsweise wird die abgekühlte Schaumstruktur zu Polymerformkörpern in Gestalt von geschäumten Polymerpartikeln granuliert, z.B. mittels einer Trennscheibe, eines Granulators, einer Klinge oder eines Schlagmessers. Zur Zerkleinerung wird die bereits stabilisierte Schaumstruktur vorzugsweise weiter abgekühlt, beispielsweise mittels Eiswasser, flüssigen Stickstoffs oder Trockeneis, um eine hohe Offenporigkeit der Trennflächen zu gewährleisten.

Auf diese Weise ist das erfindungsgemäße Verfahren hervorragend geeignet zur Herstellung von mikroporösen Polymerpartikeln zur Anwendung z.B. als Additivmasterbatch oder zur Beladung mit Wirkstoffen, wobei die Polymerpartikel eine geringe Kompressibilität und eine hohe Beladungsfähigkeit aufweisen. Da bei dem erfindungsgemäßen Verfahren keinerlei Lösemittel eingesetzt werden, lassen sich mittels des erfindungsgemäßen Verfahrens mikroporöse Polymerpartikel herstellen, die insbesondere auch für medizinische Einsatzzwecke geeignet sind.

Die Erfindung betrifft daher zum anderen geschäumte mikroporöse Polymerpartikel aus mindestens einem thermoplastischen Polymer mit gleichmäßig über den Partikelquerschnitt verteilter offenzelliger Porenstruktur, einer Porosität im Bereich von 40 bis 90 Vol.-% und einem zugänglichen Anteil des Porenvolumens von mindenstens 0,75, wobei die die offenzellige Porenstruktur ausbildenden Zellen eine mittlere Zellengröße zwischen 1 und 100 $\mu$m aufweisen.

Die erfindungsgemäßen geschäumten unikorporösen Polymerpartikel sind insbesondere zur Beladung mit Additiven oder Wirkstoffen geeignet.

Unter dem für die Beladbarkeit relevanten zugänglichen Anteil des Porenvolumens bzw. der Porenzugänglichkeit wird dabei der Anteil des aufgrund der Porosität gegebenen Porenvolumens verstanden, der für ein Additiv oder einen Wirkstoff zugänglich ist und demzufolge mit einem Additiv oder einem Wirkstoff beladen werden kann. Der zugängliche Anteil des Porenvolumens ist damit auch ein Maß für die Offenporigkeit der Stuktur des erfindungsgemäßen bzw. erfindungsgemäß hergestellten Polymerformkörpers. Vorzugsweise beträgt der zugängliche Anteil des Porenvolumens mindestens 0,85.

Für die Anwendung der erfindungsgemäßen Polymerpartikel ist unter dem Gesichtspunkt der Wirtschaftlichkeit neben der generellen Zugänglichkeit der Poren wichtig, dass Additive oder Wirkstoffen von den Polymerpartikeln auch in hinreichend kurzer Zeit aufgenommen werden können. Hierzu weisen die erfindungsgemäßen Polymerpartikel bevorzugt eine charakteristische Beladungszeit von < 90 min und bevorzugt von < 45 min auf. Damit kann eine Beladung der Partikel mit Additiven oder Wirkstoffen in genügend kurzer Zeit realisiert werden. Unter der charakteristischen Beladungszeit wird im Rahmen der vorliegenden Erfindung diejenige Zeit verstanden, die von dem Polymerformkörper benötigt wird, um die Menge an Additiv aufzunehmen, die zur Beladung von 90 % des zugänglichen Porenvolumens erforderlich ist. Hierbei wird von dem aktuell für die jeweiligen Polymerpartikel ermittelten zugänglichen Anteil des Porenvolumens ausgegangen. Für die Ermittlung der Porenzugänglichkeit sowie der charakteristischen Beladungszeit wird vorliegend als Additiv das Silan des Typs Silcat XL70 eingesetzt, das ein kommerziell erhältliches Produkt der Fa. Witco Surfactants GmbH, Organo Silicones Group, ist.

Bevorzugt sind solche mikroporösen Polymerpartikel, die eine Porosität im Bereich von 40 bis 85 Vol.-% und besonders bevorzugt solche, die eine Porosität zwischen 50 und 80 Vol.-% aufweisen. Besonders ausgewogene Eigenschaften haben erfindungsgemäße mikroporöse Polymerpartikel mit einer Porosität zwischen 60 und 75 Vol. - %. Bevorzugt sind des Weiteren solche mikroporösen Polymerpartikel mit einer mittleren Zellengröße zwischen 5 und 50 $\mu$m.

Die Struktur der erfindungsgemäß hergestellten Polymerformkörper bzw. der erfindungsgemäßen Polymerpartikel zeichnet sich durch ein dreidimensionales Netzwerk von Zellen oder Waben aus, die durch dünne Wandungen voneinander getrennt sind, wobei die Zellen oder Waben durch Löcher oder Perforationen bzw. durchlässige Netzwerkstrukturen in den Wandungen miteinander verbunden sind. Derartige die Zellen oder Waben verbindenden durchlässigen Netzwerkstrukturen sind charakteristisch für die vorliegenden Polymerformkörper bzw. Polymerpartikel und sind vermutlich zurückzuführen auf ein Aufreißen dünner Wandstrukturen während des Aufschäumens der noch plastisch deformierbaren Polymerschmelze.

Allgemeine Kriterien zur Beurteilung, ob Polymerpartikel zur Beladung mit Wirkstoffen bzw. zur Verwendung als Additivmasterbatch geeignet sind, sind zunächst die Porosität und die Offenzelligkeit der Polymerpartikel. Für die genannten Einsatzzwecke ist dabei eine genügend hohe Porosität der Polymerpartikel Voraussetzung. Gleichzeitig muss eine hohe Offenzelligkeit der Porenstruktur vorliegen, wobei nicht allein entscheidend ist, dass Verbindungen zwischen den die Schaumstruktur aufbauenden Zellen bestehen, sondern dass sie auch in genügender Weise durchlässig für das Additiv oder den Wirkstoff sind, mit dem die Polymerpartikel beladen werden sollen. Darüber hinaus ist eine hohe Beladbarkeit der Partikel ein wichtiges Beurteilungskriterium. Weiterhin ist mit Blick auf eine wirtschaftliche Verarbeitung von Bedeutung, dass die geschäumten Polymerpartikel mit dem Additiv bzw. dem Wirkstoff innerhalb einer relativ kurzen Zeit beladen werden können. Letztlich ist im Hinblick auf eine Lagerung der beladenen Polymerpartikel eine ausreichende Stabilität, d.h. eine möglichst geringe Kompressibilität ein wichtiges Kriterium. Diese Anforderungen werden von den erfindungsgemäß hergestellten bzw. den erfindungsgemäßen Polymerpartikeln in hervorragender Weise erfüllt.

In einer weiteren bevorzugten Ausführungsform liegen die erfindungsgemäßen Polymerpartikel in einer mittleren Partikelgröße im Bereich von 1 bis 5 mm vor.

Gute Ergebnisse hinsichtlich der Beladbarkeit der erfindungsgemäßen Polymerpartikel werden erzielt, wenn bereits die Zellen der Partikel an der äußeren Oberfläche zugänglich sind. Daher ist es von Vorteil, wenn die erfindungsgemäßen Polymerpartikel eine über alle äußeren Oberflächen gemittelte Oberflächenporosität von mindestens 25 % aufweisen.

Die erfindungsgemäßen geschäumten Polymerpartikel weisen aufgrund ihrer ausgewogenen Struktur, d.h. z.B. aufgrund ihrer definierten Porosität im Bereich zwischen 40 und 90 Vol.-% und einer mittleren Zellengröße von kleiner 100 $\mu$m und bevorzugt kleiner 50 $\mu$m eine hohe Stabilität, d.h. eine geringe Kompressibilität auf. Damit sind in der Anwendung die mit Additiv oder Wirkstoff beladenen erfindungsgemäßen Polymerpartikel sicher lagerfähig, ohne dass es durch Kompression der Partikel zu einem Austreten des Additivs bzw. des Wirkstoffs aus der Porenstruktur kommt.

Die Polymere, aus denen die erfindungsgemäßen Polymerpartikel aufgebaut sind, können dieselben sein, wie sie im erfindungsgemäßen Verfahren zur Herstellung der erfindungsgemäßen Polymerpartikel verwendet werden. Vorzugsweise sind die erfindungsgemäßen Polymerpartikel aus mindestens einem Polyolefin und besonders bevorzugt aus einem Polypropylen aufgebaut.

Die Erfindung soll anhand der folgenden Figur und der Ausführungsbeispiele näher erläutert werden. Dabei zeigen:

Fig. 1: Schnitt durch eine Vorrichtung, wie sie zur Durchführung des erfindungsgemäßen Verfahrens geeignet ist; vereinfachte schematische Darstellung.

Fig. 2: Abhängigkeit der Erstarrungstemperatur von der $CO_2$-Konzentration für Polypropylen Stamylan 11E10 und für Polypropylen Moplen VS6100K.

Fig. 3: Polymerformkörper entsprechend Beispiel 1 mit unzureichender Verschäumung aufgrund zu geringer Treibmittelkonzentration.

Fig. 4: Polymerformkörper entsprechend Beispiel 1 mit vollverschäumter Struktur.

Fig. 5: erfindungsgemäßer Polymerformkörper gemäß Beispiel 2 mit einer Porosität von 74 Vol.-%.

Fig. 6: erfindungsgemäßer Polymerformkörper gemäß Beispiel 4 mit einer Porosität von 73 Vol.-%.

Fig. 7: Polymerformkörper gemäß Vergleichsbeispiel 1 mit Vollverschäumung.

Fig. 8: Polymerformkörper gemäß Vergleichsbeispiel 2 mit einer Porosität von 72 Vol.-%.

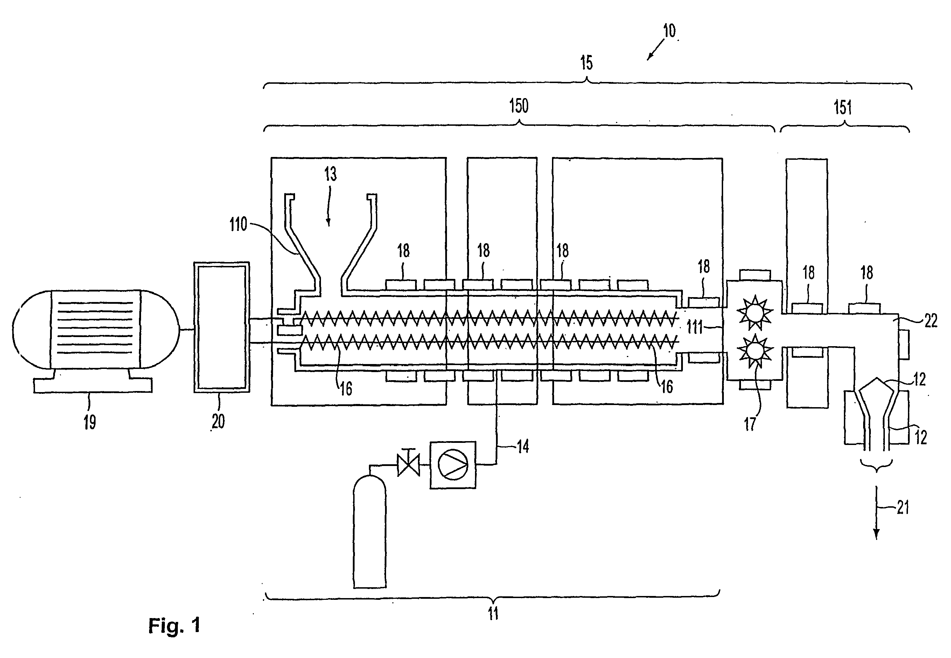

Figur 1 zeigt schematisch eine Vorrichtung, wie sie zur Durchführung des erfindungsgemäßen Verfahrens geeignet ist. Die dargestellte Vorrichtung 10 umfasst im wesentlichen einen die erste Zone 150 der Extrusionseinrichtung bildenden Extruder 11 mit einem langgestreckten Extruderkörper. In diesem Extruder 11 sind auf an sich bekannte Weise Scher-/Knet-/Homogenisierungseinrichtungen 16 angeordnet, beispielsweise nach Art eines an sich bekannten Schneckenförderers. Der Extruder weist einen trichterförmigen Einlass 110 auf, über den das typischerweise als Granulat oder Pulver vorliegende mindestens eine Polymer 13 dem Extruder 11 zugeführt und anschließend mittels der Scher-/Knet-/Homogenisierungseinrichtungen 16 unter Aufschmelzen zu einem dem Einlass 110 entgegengesetzt angeordneten Auslass 111 gefördert wird. Dazu weist die Vorrichtung einen Antriebsmotor 19 auf und gegebenenfalls ein Getriebe 20, über das die Scher-/Knet-/Homogenisierungseinrichtungen 16 drehbar mit dem Antriebsmotor 19 gekoppelt sind.

Um den langgestreckten Zylinder des Extruders 11 herum sind Temperiereinrichtungen 18 angeordnet, die Kühleinrichtungen oder Heizeinrichtungen sein können. Im mittleren Teil des Extruders 11 wird das für die Schaumbildung eingesetzte Treibmittel über eine Dosierstation und eine Zuführleitung 14 in den Innenraum des Extruders injiziert. Unmittelbar am Auslass 111 und damit den Abschluss der ersten Zone der Extrusionseinrichtung bildend ist ein mit einem Druckregulierorgan gekoppeltes Förderorgan 17 z. B. in Form einer Zahnradschmelzepumpe angeordnet.

Anschließend an das Förderorgan 17 befindet sich die zweite Zone 151 der Extrusionseinrichtung, die vorliegend beispielsweise als ein rechtwinkelig abknickender, rohrförmiger Extruderkopf 22 ausgebildet ist. Die zweite Zone weist ebenfalls Temperiereinrichtungen 18 auf, über die die sich im Innenraum des Extruderkopfs befindliche gasangereicherte Polymerschmelze in geeigneter Weise temperiert werden kann. Vorzugsweise enthält der Extruderkopf 22 - hier nicht dargestellte - Mischeinrichtungen, wobei statische Mischelemente bestens geeignet sind. In Extrusionsrichtung gesehen am Ende des Extruderkopfs 22 ist ein Formwerkzeug 12 angeordnet, mittels dessen die Ausformung der treibmittelbeladenen Polymerschmelze erfolgt und bei dessen Verlassen die treibmittelhaltige Polymerschmelze zum porösen Formkörper aufschäumt. Der Austritt des Formkörpers aus der Vorrichtung 10 ist durch den Pfeil 21 symbolisiert.

Das erfindungsgemäße Verfahren läuft nun unter Verwendung der vorbeschriebenen Vorrichtung 10 wie folgt ab:

Das mindestens eine Polymer 13, das vorzugsweise in Form eines Granulats vorliegt, wird über den trichterförmigen Einlass 110 in den die erste Zone 150 der Extrusionseinrichtung bildenden Extruder 11 eingespeist, wobei das mindestens eine Polymer über die Temperiereinrichtungen 18 zunächst aufgeschmolzen wird. Dabei wird das aufschmelzende bzw. das schließlich aufgeschmolzene Polymer mittels der durch den Antriebsmotor 19 angetriebenen Scher-/Knet-/Homogenisierungseinrichtungen 16 in den Bereich des Extruders 11 gefördert, in den das Treibmittel über die Dosierstation und die Zuführleitung 14 in den Innenraum des Extruders 11 unter hohem Druck injiziert wird. Die Menge an Treibmittel wird dabei so eingestellt, dass die Konzentration des Treibmittels in der Polymerschmelze oberhalb der Mindestkonzentration für die Vollverschäumung liegt.

Durch die Rotation der Scher-/Knet-/Homogenisierungseinrichtungen 16 wird zum einen verhindert, dass sich das Treibmittel oberhalb der Schmelze des mindestens einen Polymers absetzt. Zum anderen wird ein Einmischen des Treibmittels in die Polymerschmelze bewirkt, wobei bereits ein zumindest teilweises Lösen des Treibmittels in der Polymerschmelze erfolgt. In dem der Einleitungsstelle des Treibmittels nachfolgenden Teil des Extruders 11 kann über die Temperiereinrichtungen 18 die Temperatur der mit Treibmittel angereicherten Schmelze gegenüber der ursprünglichen Schmelztemperatur bereits abgesenkt und dann bis zum Austritt 111 im wesentlichen konstant gehalten werden, um so die Löslichkeit des Treibmittels in der Polymerschmelze zu verbessern.

Mittels der Zahnradschmelzepumpe 17 wird die mit Treibmittel beaufschlagte Polymerschmelze in die zweite Zone 151 der Extrusionseinrichtung gefördert. In dieser zweiten Zone, die vorliegend als rohrförmiger Extruderkopf 22 ausgebildet ist, wird mittels der dort angebrachten Temperiereinrichtungen 18 eine Reduzierung der Temperatur der treibmittelhaltigen Polymerschmelze auf die Schäumungstemperatur vorgenommen, die abhängig von der angestrebten Porosität des erhaltenen porösen Polymerformkörpers, vorzugsweise bis zu 30 % höher als die Erstarrungstemperatur der treibmittelhaltigen Polymerschmelze ist. Gleichzeitig erfolgt in der zweiten Zone 151 gegebenenfalls eine Druckerhöhung, wobei in jedem Fall ein Druck von mehr als 90 bar einzustellen ist. Bei diesen Bedingungen wird eine nochmalige Erhöhung der Löslichkeit des Treibmittels in der Polymerschmelze erreicht.

Die treibmittelhaltige Polymerschmelze wird im Formwerkzeug 12 ausgeformt und schäumt bei Verlassen des Formwerkzeugs 12 aufgrund des Druckabfalls zu einer Schaumstruktur auf. Anschließend wird die Schaumstruktur auf geeignete Weise abgekühlt, und man erhält den erfindungsgemäßen porösen Polymerformkörper mit einer offenzelligen Struktur und einer einstellbaren Porosität im Bereich zwischen 40 und 90 Vol.-%.

In den nachfolgenden Beispielen wurden folgende Methoden zur Charakterisierung der erhaltenen porösen Polymerformkörper angewendet.

Bestimmung der Partikelgröße:

Die Bestimmung der mittleren Partikelgröße kann mikroskopisch anhand einer repräsentativen Probemenge mittels eines Messokulars oder mittels eines geeigneten Bildauswerteverfahrens erfolgen.

Bestimmung der mittleren Zellengröße:

Die mittlere Zellengröße oder Porengröße wird anhand von digitalisierten REM-Aufnahmen von Bruchbildern der Proben vorgenommen, die mit Hilfe einer geeigneten Bildanalyse-Software ausgewertet werden. Dabei wird aus einer REM-Aufnahme der Porendurchmesser bzw. der Zellendurchmesser von ca. 50 bis 100 Zellen bzw. Poren in $\mu$m gemessen. Aus den Einzelwerten wird über Mittelwertbildung die zugehörige mittlere Zellengröße bzw. der mittlere Porendurchmesser berechnet.

Bestimmung der Volumenporosität:

Die Bestimmung der Volumenporosität erfolgt pyknometrisch. Hierzu werden ca. 1 bis 5 g des zu untersuchenden Materials trocken eingewogen, wobei das Probenmaterial gegebenenfalls z.B. mittels einer Klinge unter Kühlung zu zerkleinern ist. Um bei der weiteren Bestimmung ein Aufschwimmen des Probenmaterials wegen der geringen Dichte der porösen Partikel zu vermeiden, wird das Probenmaterial in einem geeigneten Käfig in das Pyknometer eingeführt, wobei ein 100 ml Pyknometer mit Thermometer und Seitenkapillare verwendet wird. Das Pyknometer wird dann mit einer geeigneten, das Probenmaterial nicht benetzenden Messflüssigkeit aufgefüllt, wobei in der Regel Wasser (18 MOhm-Wasser) eingesetzt werden kann. Das tatsächliche Volumen des Pyknometers wird vorab mit der später eingesetzten Messflüssigkeit ermittelt. Die Messung erfolgt bei 20°C. Mit Hilfe der Einwaage an Probenmaterial, der Dichte des das Probenmaterials aufbauenden Polymers, der Dichte der verwendeten Messflüssigkeit sowie der Massendifferenz der Messflüssigkeit im Pyknometer mit und ohne Probenmaterial lässt sich die Porosität $\varepsilon$ des Probenmaterials ermitteln.

Bestimmung des zugänglichen Anteils des Porenvolumens bzw. der Porenzugänglichkeit:

Die Bestimmung des zugänglichen Anteils des Porenvolumens bzw. der Porenzugänglichkeit setzt voraus, dass die Volumenporosität des zu untersuchenden Materials bekannt ist.

Von dem zu untersuchenden Material werden ca. 10 bis 30 g in einen 500 ml Glaskolben eingewogen. Sofern es sich bei dem zu untersuchenden Material um Polymerformkörper handelt, die als Strang oder als Folie vorliegen, werden diese zunächst zu Partikeln mit Abmessungen im Bereich von ca. 1 bis 5 mm zerkleinert. Hierbei ist darauf zu achten, dass bei der Zerkleinerung, die zweckmäßigerweise mit scharfen Werkzeugen wie z.B. Rasierklingen, Mikrotommesser oder Granulatoren sowie gegebenenfalls unter Kühlung erfolgt, offene Schnittflächen erhalten werden. Liegt das zu untersuchende Material bereits in Partikelform vor, kann es direkt eingesetzt werden.

Der zugängliche Anteil des Porenvolumens wird anhand der Beladbarkeit mit einem Additiv ermittelt, wobei als Additiv das Silan des Typs Silcat XL70 (Fa. Witco Surfactants GmbH, Organo Silicones Group) eingesetzt wird. Dabei bestimmt sich die Menge des Silans, die zu dem Probenmaterial zuzugeben ist, d.h. das hinzuzufügende Volumen des Silans nach der Porosität des Probenmaterials bzw. nach dem Porenvolumen des eingewogenen Probenmaterials, wobei sich das Porenvolumen des Probenmaterials aus der Einwaage, der Polymerdichte $\rho_{Polymer}$ sowie der Porosität $\varepsilon$ ermitteln lässt. Im ersten Schritt wird soviel Silan zudosiert, dass eine vollständige Aufnahme des Silans durch das Probenmaterial erwartet werden kann. Hierzu wird ein Silanvolumen zugegeben, das ca. 60 % des ermittelten Porenvolumens der Probe entspricht.

Nach der Zugabe wird der Glaskolben mit einer geeigneten Mischeinrichtung wie z.B. einem Rotationsverdampfer mit einem auf 25°C temperierten Wasserbad verbunden. Im Anschluss daran wird solange gemischt, bis das Probenmaterial außen trocken und gut rieselfähig ist. Die Beladungszeit vom Beginn des Mischens bis zur kompletten Aufnahme des Additivs wird mit einer Stoppuhr ermittelt.

Danach wird der Glaskolben von der Mischeinrichtung abgenommen und es wird eine weitere Silanmenge zugegeben, die 5 % des Porenvolumens entspricht. Anschließend wird erneut gemischt und wiederum die Zeit gestoppt, bis auch diese Silanmenge vollständig von der Probe aufgenommen worden ist. Dieser Vorgang wird so oft wiederholt, bis Sättigung des Probenmaterials mit dem Additiv erreicht ist, wobei jeweils eine Silanmenge zudosiert wird, die 5 % des Porenvolumens entspricht. Als Sättigung wird dabei der Zustand definiert, bei dem auch nach einer Gesamtbeladungsdauer von 3 Std noch ein Film des Silans an der Wand des Glaskolbens und/oder ein Verkleben der Teilchen des Probenmaterials beobachtet wird. Hierbei wird als Gesamtbeladungsdauer die Summe der einzelnen mittels Stoppuhr ermittelten Beladungszeiten angesetzt. Das gesättigte Probenmaterial wird danach zurückgewogen und aus der Differenz mit der Einwaage die Gesamtmenge des von dem Probenmaterial aufgenommenen Silans ermittelt.

Der zugängliche Anteil der Porenvolumens bzw. die Porenzugänglichkeit $\alpha$ lässt sich dann unter Einsetzen der Dichte $\rho_{Silan}$ des verwendeten Silans Silcat XL-Pearl 70 ($\rho_{Silan}$ = 0,91 g/cm$^3$) nach folgender Beziehung ermitteln:

$$\alpha = \frac{V_{Silan}}{V_{Porenvolumen}} = \frac{m_{Silan} / \rho_{Silan}}{\dfrac{\varepsilon}{100 - \varepsilon} \cdot (m_{Probe} / \rho_{Polymer})}$$

Hierbei bedeuten:

| | |
|---|---|
| $\alpha$ | = Porenzugänglichkeit bzw. zugänglicher Anteil des Porenvolumens |
| $V_{Silan}$ | = Volumen des bis zur Sättigung des Probenmaterials zugegebenen Silans in cm$^3$ |
| $V_{Porenvolumen}$ | = Porenvolumen des eingewogenen Probenmaterials in cm$^3$ |
| $m_{Silan}$ | = Masse des bis zur Sättigung des Probenmaterials zugegebenen Silans in g |
| $m_{Probe}$ | = Einwaage des Probenmaterials in g |
| $\rho_{Silan}$ | = Dichte des verwendeten Silans in g/cm$^3$ |
| $\rho_{Polymer}$ | = Dichte des das Probenmaterial aufbauenden Polymers in g/cm$^3$ |
| $\varepsilon$ | = Porosität des Probenmaterials in % |

Bestimmung der charakteristischen Beladungszeit:

Die Ermittlung der charakteristischen Beladungszeit setzt die Kenntnis der Porosität $\varepsilon$ sowie des zugänglichen Porenvolumens $\alpha$ des Probenmaterials voraus.

Für die Ermittlung der charakteristischen Beladungszeit wird wiederum eine Menge von ca. 10 bis 30 g an Probenmaterial in einen 500 ml Glaskolben eingewogen. Hinsichtlich der Probenvorbereitung sei auf die zuvor gemachten Ausführungen verwiesen.

Die charakteristische Beladungszeit wird für diejenige Additivmenge ermittelt, die zur Beladung von 90% des zugänglichen Porenvolumens des Probenmaterials erforderlich ist. Als Additiv wird wiederum das Silan Silcat XL-Pearl 70 verwendet. Die zu dem eingewogenen Probenmaterial zuzugebende Silanmenge $m_{90\%}$ kann dabei nach der folgenden Beziehung ermittelt werden:

$$m_{90\%} \, [g] = 0{,}9 \cdot \alpha \cdot \rho_{Silan} \cdot \frac{\varepsilon}{100 - \varepsilon} \cdot (m_{Probe} / \rho_{Polymer})$$

Nach der Zugabe des Silans wird der Glaskolben mit einer geeigneten Mischeinrichtung wie z.B. einem Rotationsverdampfer mit einem auf 25°C temperierten Wasserbad verbunden. Im Anschluss daran wird solange gemischt, bis das Probenmaterial außen trocken und gut rieselfähig ist. Die Zeit vom Beginn des Mischens bis zur kompletten Aufnahme des Additivs wird mit einer Stoppuhr ermittelt und stellt die charakteristische Beladungszeit des Probenmaterials dar.

## Bestimmung der Oberflächenporosität:

Die Oberflächenporosität wird mittels rasterelektronenmikroskopischer (REM-) Aufnahmen ermittelt. Hierzu werden von den Oberflächen der Partikel bei ca. 100-facher Vergrößerung REM-Aufnahmen repräsentativer Ausschnitte der Partikeloberfläche der Größe 0,8 mm x 0,6 mm angefertigt und bildanalytisch analysiert. Die REM-Aufnahmen werden digitalisiert und die Fläche der sich in den Aufnahmen dunkel von hellen, den Zellwänden zuzuordnenden Bereichen abhebenden Poren bzw. Zellen mittels eines Rechners bestimmt. Die Oberflächenporosität berechnet sich dann als das Verhältnis der Porenfläche zur Gesamtfläche.

## Bestimmung der Kompressibilität:

Die Messung erfolgt für Vollfäden oder Hohlfäden mit einem kommerziell erhältlichen halbautomatischen Dickenmessgerät, das für Prüfungen nach DIN 53855 Teil 1 geeignet ist, wie z.B. dem Gerät des Typs 16304 der Fa. Karl Frank GmbH. Bei diesem Gerät wird ein Stempel mit austauschbaren Belastungsmassen von einem Getriebemotor auf die zu vermessende Probe abgesenkt bzw. angehoben. Dabei findet eine Wegmessung über einen digitalen Wegaufnehmer statt.

Für die Messung wird ein Stempel mit einer Fläche von 10 cm$^2$ und einem Durchmesser von 35,68 mm verwendet. Auf der Grundplatte wird ein gerades Stück des Probenmaterials so fixiert, dass der Stempel mit seinem vollen Durchmesser entlang einer 35,68 mm langen Linie radial auf die Mantelfläche des Probenmaterials pressen kann. Die Probe wird bei Raumtemperatur mit verschiedenen Kräften belastet und der Abstand zwischen der Stempelunterkante und der Grundplattte jeweils nach einer Belastungszeit von 10 sec gemessen. Dabei werden in ansteigender Reihenfolge z.B. Anpresskräfte bzw. Lasten von 0,5; 1,25; 2,5; 5,5; 12,5; 20; 25 und 50 N erzeugt.

Der Quotient der gemessenen Abstände, d.h. der jeweiligen Dicken des Probenmaterials im gepressten Zustand, zur ursprünglichen Probendicke im ungepressten Zustand wird im halblogarithmischen Maßstab gegen die aufgebrachte Kraft aufgetragen. Dabei wird der gemessene Abstand bei einer Last von 0,5 N als ursprüngliche Probendicke angesetzt. Aus dem Quotienten Q bei einer Last von 10 N wird die Kompressibilität des Probenmaterials als (1 - Q) · 100 in % ermittelt.

## Beispiel 1:

Zur Ermittlung der kritischen Mindestkonzentration für die Vollverschäumung wurde zum einen Polypropylen Stamylan 11E10 (Fa. DSM; Schmelzindex = 0,3 g/10 min bei 230°C/21,6N) und zum anderen Moplen VS 6100K (Fa. Montell; Schmelzindex = 25 g/10 min bei 230°C/21,6N) einer Extrusionseinrichtung der in Fig. 1 gezeigten Art zugeführt und im Extruder aufgeschmolzen. Im Falle von Stamylan 11E10 wurde eine Aufschmelztemperatur von 250°C eingestellt, für Moplen VS 6100K eine Aufschmelztemperatur von 185°C. In die aufgeschmolzene Polypropylenschmelze wurde als Treibmittel überkritisches $CO_2$ in Konzentrationen zwischen 0 und 13 Gew.-% unter einem Druck im Bereich zwischen 160 und 210 bar injiziert. Nach der Injizierung wurde das $CO_2$ durch die Knet- und Scherwirkung der Extruderschnecke in die Polymerschmelze eingemischt und teilweise in dieser gelöst.

Mittels einer Zahnradschmelzepumpe wurde die jeweilige mit $CO_2$ beladene Polypropylenschmelze in die zweite Zone der Extrusionseinrichtung gefördert, die als abgewinkelter rohrförmiger Extruderkopf ausgebildet war, und anschließend durch eine am Ende der zweiten Zone angebrachte Düse mit kreisförmiger Austrittsöffnung aus der Extrusionseinrichtung ausgetragen. Dabei schäumte die gasbeladene Polymerschmelze zu einem Schaumfaden auf. Über am Extruderkopf angebrachte Temperierelemente wurde die Temperatur der gasbeladenen Schmelze jeweils bis auf die Erstarrungstemperatur stufenweise reduziert, d.h. bis auf die Temperatur, unterhalb derer eine Erstarrung der jeweiligen mit $CO_2$ beladenen Polypropylenschmelze auftritt und die Schmelze nicht mehr aus der Düse austritt.

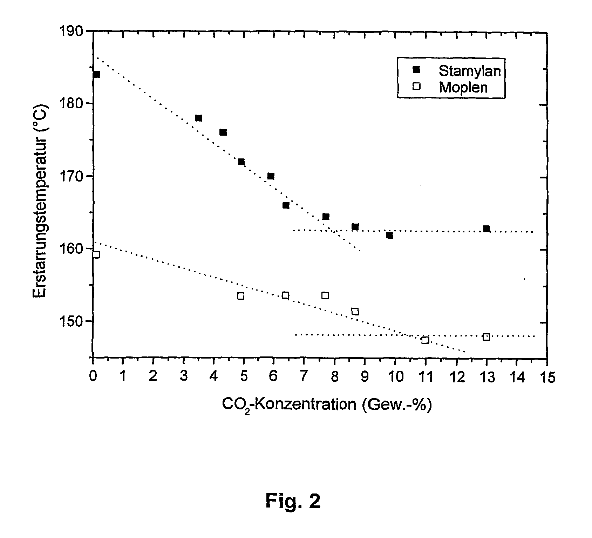

Die für die beiden untersuchten Polypropylentypen ermittelten Erstarrungstemperaturen sind in der Figur 2 in Abhängigkeit von der Treibmittelkonzentration in Gew.-% aufgetragen, d.h. über der pro Zeiteinheit in den Extruder dosierten $CO_2$-Menge, bezogen auf die in der Zeiteinheit geförderte Polymerlösungsmenge, also auf die aus Polymer und Treibmittel zusammengesetzte Gesamtmenge.

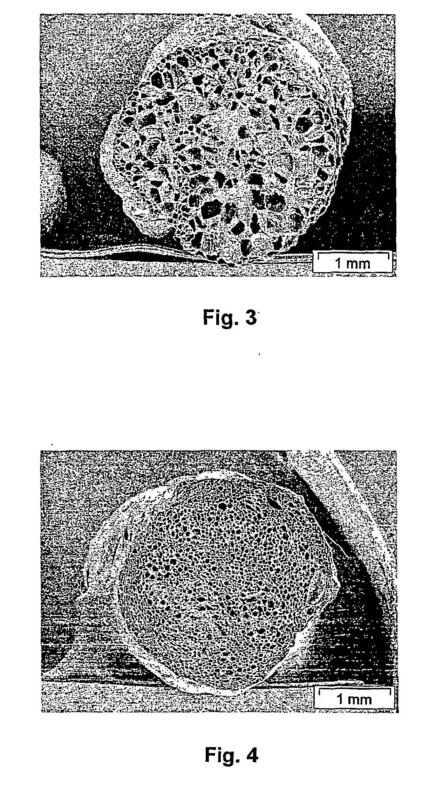

Für beide Polymere nimmt die Erstarrungstemperatur in einem ersten Konzentrationsbereich von der Erstarrungstemperatur des reinen Polymers ausgehend mit zunehmender $CO_2$-Konzentration zunächst ab und bleibt dann in einem zweiten Konzentrationsbereich bei höheren $CO_2$-Konzentrationen konstant. Die durch die Punkte in den jeweiligen Bereichen gelegten Ausgleichsgeraden schneiden sich für Stamylan 11E10 bei ca. 7,7 Gew.-% und für Moplen VS 6100K bei ca. 10,5 Gew.-%. Die zu diesen Schnittpunkten zugehörigen $CO_2$-Konzentrationen stellen die kritischen Mindestkonzentrationen für die Vollverschäumung für die Systeme Stamylan 11E10 / $CO_2$ und Moplen VS 6100K / $CO_2$ dar. Bei $CO_2$-Konzentrationen unterhalb der kritischen Mindestkonzentration für die Vollverschäumung werden keine vollverschäumten Strukturen erhalten (Figur 3). Erst ab der kritischen Mindestkonzentration wird eine Vollverschäumung erreicht mit einer Porosität oberhalb von 95 Vol.-% und einer homogenen Porenstruktur (Figur 4).

Beispiel 2:

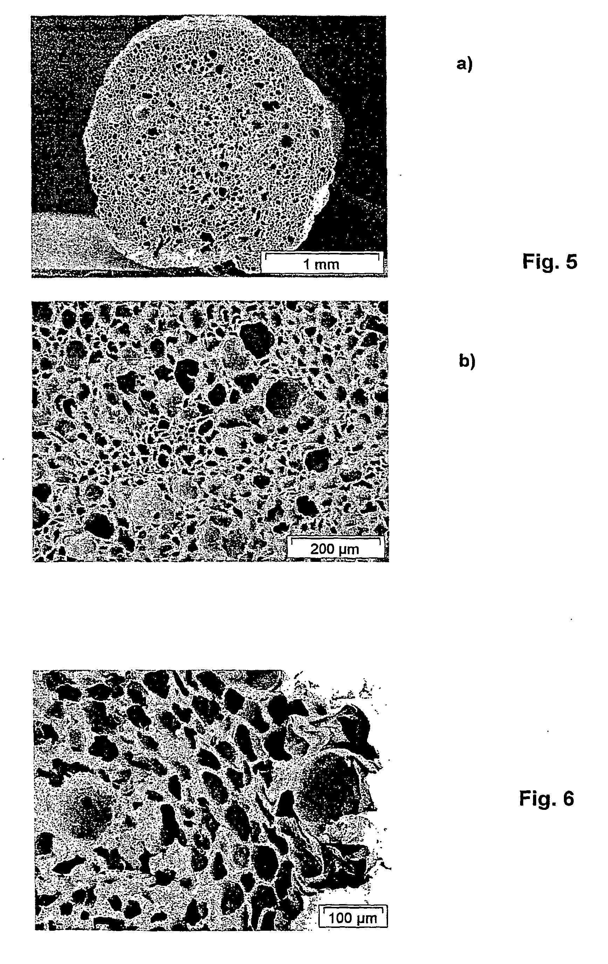

Polypropylen der Type Stamylan 11E10 (Fa. DSM) wurde in einer Extrudereinrichtung entsprechend Beispiel 1 verarbeitet. Das Polymer wurde bei einer Temperatur von 250 °C aufgeschmolzen. In das aufgeschmolzene Polymer wurde als Treibmittel überkritisches $CO_2$ in einer Konzentration von 7,7 Gew.-% unter einem Druck von 179 bar injiziert. Die mit $CO_2$ beaufschlagte Polypropylenschmelze wurde nach Durchlaufen der zweiten Zone durch eine Düse mit einem Durchmesser von 0,8 mm extrudiert. Die Temperatur in der zweiten Zone, d.h. die Schäumungstemperatur war auf 188 °C eingestellt, d.h. auf eine Temperatur, die um ca. 15% höher lag als die Erstarrungstemperatur von 163 °C. Der Druck in der zweiten Zone lag oberhalb von 97 bar.
Bei Verlassen der Düse schäumte die extrudierte Schmelze zu einem porösen Vollfaden mit mikroporöser, offenzelliger Struktur und einem Durchmesser von 2,25 mm auf. Die Porosität wurde zu 74 Vol.-% ermittelt. Der geschäumte Vollfaden wies eine mittlere Zellengröße von ca. 34 µm auf (Figur 5 a,b). Die Kompressibilität dieses Vollfadens unter einer Last von 10 N betrug 15 %.
Dabei wird für die Verwendung derartiger Produkte z.B. als Additivkonzentrat eine Kompressibilität von maximal 25 % unter einer Last von 10 N als ausreichend angesehen, um eine ausreichende Lagestabilität zu gewährleisten.

Beispiel 3:

Der poröse Vollfaden des Beispiels 2 aus Stamylan 11E10 wurde unter Kühlung mittels eines Granulators zu zylinderförmigen Partikeln zerkleinert, deren Länge ca. 2,25 mm betrug und deren Durchmesser demjenigen des Vollfadens entsprach. Bei einer Gesamtporosität von 74 Vol.-% wiesen die so hergestellten porösen Polymerpartikel eine Porenzugänglichkeit α von 0,87 und eine charakteristische Beladungszeit von 35 min auf. Ihre Oberflächenporosität betrug ca. 29 %.

Beispiel 4:

Polypropylen der Type Moplen VS 6100K (Fa. Montell) wurde in einer Extrudereinrichtung entsprechend Beispiel 1 verarbeitet. Das Polymer wurde bei einer Temperatur von 185 °C aufgeschmolzen. In das aufgeschmolzene Polymer wurde als Treibmittel überkritisches $CO_2$ in einer Konzentration von 10,5 Gew.-% unter einem Druck von 210 bar injiziert. Die mit $CO_2$ beaufschlagte Polypropylenschmelze wurde nach Durchlaufen der zweiten Zone durch eine Düse mit einem Durchmesser von 0,8 mm extrudiert. Die Temperatur in der zweiten Zone war auf 164°C eingestellt, d.h. auf eine Temperatur, die um ca. 11 % höher lag als die Erstarrungstemperatur von 148 °C. Der Druck in der zweiten Zone lag bei 112 bar.
Bei Verlassen der Düse schäumte die extrudierte Schmelze zu einem porösen Vollfaden mit mikroporöser, offenzelliger Struktur und einem Durchmesser von 1,15 mm auf. Die Porosität wurde zu 73 Vol.-% ermittelt. Der geschäumte Vollfaden wies eine mittlere Zellengröße von ca. 44 µm auf (Figur 6). Die Kompressibilität dieses Vollfadens unter einer Last von 10 N betrug 18%.

Beispiel 5:

Der poröse Vollfaden des Beispiels 4 aus Moplen VS 6100K wurde unter Kühlung mittels eines Granulators zu zylinderförmigen Partikeln zerkleinert, deren Länge ca. 1,5 mm betrug und deren Durchmesser demjenigen des Vollfadens entsprach. Bei einer Gesamtporosität von 73 Vol.-% wiesen die so hergestellten porösen Polymerpartikel eine Porenzugänglichkeit α von 0,85 und eine charakteristische Beladungszeit von 20 min auf. Ihre Oberflächenporosität betrug ca. 27%.

Vergleichsbeispiel 1:

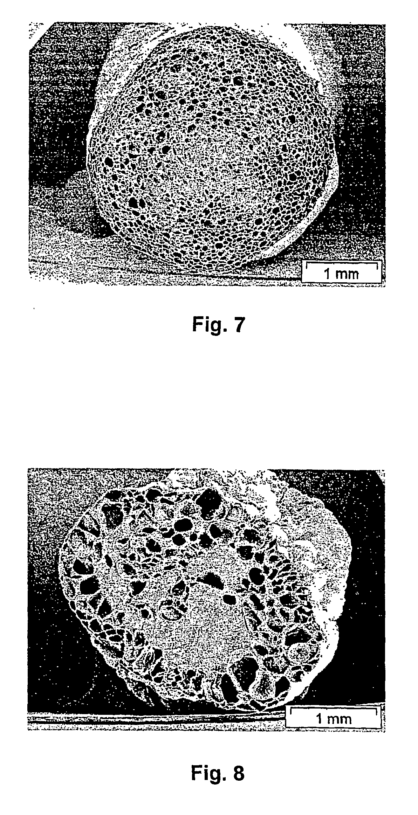

Analog zu Beispiel 2 wurde Polypropylen der Type Stamylan 11E10 einer Extrudereinrichtung entsprechend Beispiel 1 verarbeitet. In das aufgeschmolzene Polymer wurde überkritisches $CO_2$ in einer Konzentration von ca. 8 Gew.-% injiziert. Die Temperatur in der zweiten Zone war jedoch auf 172 °C eingestellt, d.h. auf eine Temperatur, die um ca. 5,5% höher lag als die Erstarrungstemperatur von 163 °C.
Der so erhaltene geschäumte Vollfaden wies eine Porosität von 96 Vol.-% auf, die damit der Porosität bei einer Vollverschäumung entsprach und außerhalb des erfindungsgemäß geforderten Bereichs lag (Figur 7). Die als Schäumungstemperatur eingestellte Temperatur von 172 °C war also nicht ausreichend hoch. Dieser vollverschäumte Vollfaden - und damit auch daraus hergestellte poröse Polypropylenpartikel - wies bei einer Last von 10 N mit 39 % eine deutlich zu hohe Kompressibilität auf.

Vergleichsbeispiel 2:

Es wurde ebenfalls analog zu Beispiel 2 Polypropylen der Type Stamylan 11E10 in einer Extrudereinrichtung entsprechend Beispiel 1 verarbeitet. In das aufgeschmolzene Polymer wurde als Treibmittel überkritisches $CO_2$ injiziert, jedoch in einer Konzentration von nur 4,3 Gew.-%. Die Temperatur in der zweiten Zone war auf 179 °C eingestellt und damit auf eine Temperatur, die geringfügig oberhalb der bei dieser Konzentration ermittelten Erstarrungstemperatur lag.

Der so erhaltene geschäumte Vollfaden wies zwar eine Porosität von 72 Vol.-% auf, jedoch zeigte sich im Querschnitt eine ausgeprägte Inhomogenität in der Porenstruktur mit großen nichtporösen Bereichen (Figur 8).

**Patentansprüche**

1. Verfahren zur Herstellung geschäumter mikroporöser Polymerformkörper aus mindestens einem thermoplastischen Polymer, umfassend die Schritte

    a. Aufschmelzen des mindestens einen thermoplastischen Polymers bei einer ersten Temperatur in einer ersten Zone einer Extrusionseinrichtung und Einleitung eines gegenüber der so hergestellten Polymerschmelze druckerhöhten Treibmittels in die erste Zone der Extrusionseinrichtung,
    b. Beaufschlagung der Polymerschmelze in der ersten Zone der Extrusionseinrichtung mit dem Treibmittel und Einmischen des Treibmittels in die Polymerschmelze unter Einwirkung eines Scher- und/oder Knetmittels auf die Polymerschmelze, wobei gleichzeitig ein zumindest teilweises Lösen des Treibmittels in der Polymerschmelze erfolgt,
    c. Förderung der mit dem Treibmittel beaufschlagten Polymerschmelze mittels eines mit einem Druckregulierorgan gekoppelten Förderorgans durch eine sich an die erste Zone anschließende zweite Zone der Extrusionseinrichtung zu einem am Ende der zweiten Zone angeordneten Formwerkzeug, wobei die Temperatur in der zweiten Zone auf eine zweite, als Schäumungstemperatur bezeichnete Temperatur eingestellt wird, die gleich der ersten Temperatur oder kleiner als diese ist, wobei in der zweiten Zone ein Lösen des Treibmittels bis zu Sättigung der Polymerschmelze erfolgt,
    d. Ausformung der Polymerschmelze im Formwerkzeug und anschließendes Schäumen der ausgeformten mit dem Treibmittel beladenen Polymerschmelze bei Austritt der Polymerschmelze aus dem Formwerkzeug zu einer Schaumstruktur aufgrund des in der Polymerschmelze enthaltenen Treibmittels,
    e. Abkühlung der Schaumstruktur bis zu ihrer Erstarrung,

    wobei in der zweiten Zone der Extrusionseinrichtung ein Druck oberhalb eines Mindestdrucks $p_{min}$ von 90 bar eingestellt wird und die in der zweiten Zone der Extrusionseinrichtung hergestellte, mit Treibmittel beladene Polymerschmelze eine Erstarrungstemperatur aufweist, **dadurch gekennzeichnet, dass**

    - eine Treibmittelkonzentration eingestellt wird, die mindestens so groß wie die kritische Mindestkonzentration für eine Vollverschäumung ist, und
    - die Schäumungstemperatur so auf eine Temperatur oberhalb der Erstarrungstemperatur eingestellt wird, dass der erhaltene poröse Polymerformkörper eine Porosität im Bereich zwischen 40 und 90 Vol.-% und eine gleichmäßig über den Querschnitt verteilte offenzellige Porenstruktur aufweist.

2. Verfahren nach Anspruch 1, **dadurch gekennzeichnet, dass** die Schäumungstemperatur auf eine Temperatur eingestellt wird, die maximal bis zu 30 % höher als die Erstarrungstemperatur ist.

3. Verfahren nach Anspruch 1, **dadurch gekennzeichnet, dass** die Schäumungstemperatur auf eine Temperatur eingestellt wird, die 10 bis 30 % höher als die Erstarrungstemperatur ist.

4. Verfahren nach Anspruch 3, **dadurch gekennzeichnet, dass** die Schäumungstemperatur auf eine Temperatur eingestellt wird, die 10 bis 20 % höher als die Erstarrungstemperatur ist.

5. Verfahren nach Anspruch 1, **dadurch gekennzeichnet, dass** die Schäumungstemperatur so auf eine Temperatur eingestellt wird, die 10 bis 20 % höher als die Erstarrungstemperatur ist, dass der erhaltene poröse Polymerformkörper eine offenzellige Struktur und eine Porosität im Bereich von 50 bis 80 Vol.-% aufweist.

6. Verfahren nach einem oder mehreren der Ansprüche 1 bis 5, **dadurch gekennzeichnet, dass** das Treibmittel mit einem Druck in die erste Zone der Extrusionseinrichtung eingeleitet wird, der höher als der Druck in der ersten Zone der Extrusionseinrichtung ist.

7. Verfahren nach einem oder mehreren der Ansprüche 1 bis 6, **dadurch gekennzeichnet, dass** die mit Treibmittel beaufschlagte Polymerschmelze in der zweiten Zone durch Mischelemente gemischt wird.

8. Verfahren nach einem oder mehreren der Ansprüche 1 bis 7, **dadurch gekennzeichnet, dass** als Treibmittel $CO_2$ verwendet wird.

9. Verfahren nach einem oder mehreren der Ansprüche 1 bis 8, **dadurch gekennzeichnet, dass** das Formwerkzeug auf eine unabhängig von der Schäumungstemperatur einstellbare Formwerkzeugtemperatur temperiert wird, die oberhalb der Schäumungstemperatur liegt.

10. Verfahren nach Anspruch 9, **dadurch gekennzeichnet, dass** die Formwerkzeugtemperatur auf eine Temperatur eingestellt wird, die bis zu 20 % höher als die Schäumungstemperatur ist.

11. Verfahren nach einem oder mehreren der Ansprüche 1 bis 10, **dadurch gekennzeichnet, dass** der Druck $p_{min}$ in der zweiten Zone der Extrusionseinrichtung mindestens 120 bar beträgt.

12. Verfahren nach einem oder mehreren der Ansprüche 1 bis 11, **dadurch gekennzeichnet, dass** das mindestens eine thermoplastische Polymer mindestens ein Polyolefin ist.

13. Verfahren nach einem oder mehreren der Ansprüche 1 bis 12, **dadurch gekennzeichnet, dass** das mindestens eine Polyolefin Polypropylen ist.

14. Verfahren nach einem oder mehreren der Ansprüche 1 bis 13, **dadurch gekennzeichnet, dass** der geschäumte Polymerformkörper ein Vollfaden ist.

15. Verfahren nach einem oder mehreren der Ansprüche 1 bis 13, **dadurch gekennzeichnet, dass** der geschäumte Polymerformkörper ein Hohlfaden ist.

16. Verfahren nach einem oder mehreren der Ansprüche 1 bis 13, **dadurch gekennzeichnet, dass** der geschäumte Polymerformkörper eine Folie ist.

17. Verfahren nach einem oder mehreren der Ansprüche 1 bis 16, **dadurch gekennzeichnet, dass** die Schaumstruktur zu geschäumten Polymerpartikeln zerkleinert wird.

18. Verfahren nach einem oder mehreren der Ansprüche 1 bis 16, **dadurch gekennzeichnet, dass** die Schaumstruktur granuliert wird.

19. Geschäumte mikroporöse Polymer partikel aus mindestens einem thermoplastischen Po ymer mit gleichmäßig über den Querschnitt verteilter offenzelliger Porenstruktur, einer Porosität von 40 bis 90 Vol.-% und einem zugänglichen Anteil des Porenvolumens von mindenstens 0,75, wobei die die offenzellige Porenstruktur ausbildenden Zellen eine mittlere Zellengröße zwischen 1 und 100 $\mu$m aufweisen.

20. Geschäumte mikroporöse Polymerpartikel nach Anspruch 19 mit einer Porosität zwischen 50 und 80 Vol.-%.

21. Geschäumte mikroporöse Polymerpartikel nach einem oder mehreren der Ansprüche 19 oder 20, **dadurch gekennzeichnet, dass** das mindestens eine thermoplastische Polymer mindestens ein Polyolefin ist.

22. Geschäumte mikroporöse Polymerpartikel nach Anspruch 21, **dadurch gekennzeichnet, dass** das mindestens eine Polyolefin Polypropylen ist.

23. Geschäumte mikroporöse Polymerpartikel nach einem oder mehreren der Ansprüche 19 bis 22, **dadurch gekennzeichnet, dass** sie eine mittlere Partikelgröße von 1 bis 5 mm aufweisen.

24. Geschäumte mikroporöse Polymerpartikel nach einem oder mehreren der Ansprüche 19 bis 23, **dadurch gekenn-**

**zeichnet, dass** sie eine Oberflächenporosität von mindestens 25 % aufweisen.

25. Geschäumte mikroporöse Polymerpartikel nach einem oder mehreren der Ansprüche 19 bis 24, **dadurch gekennzeichnet, dass** sie eine charakteristische Beladungszeit von <90 min aufweisen.

**Claims**

1. A method for production of foamed microporous polymer moulded bodies from at least one thermoplastic polymer, comprising the steps

   a. melting of the at least one thermoplastic polymer at a first temperature in a first zone of an extrusion device, and introduction of a blowing agent, at a pressure higher than that of the polymer melt so produced, into the first zone of the extrusion device,
   b. loading of the polymer melt in the first zone of the extrusion device with the blowing agent, and mixing of the blowing agent into the polymer melt under the action of a shearing and/or kneading means on the polymer melt, whereby at least partial dissolution of the blowing agent in the polymer melt occurs simultaneously,
   c. conveying of the polymer melt loaded with blowing agent, by means of a conveyor system coupled to a pressure regulating device, through a second zone of the extrusion device following the first zone and into a die positioned at the end of the second zone, whereby the temperature in the second zone is set to a second temperature, referred to as the foaming temperature, which is equal to or lower than the first temperature, whereby dissolution of the blowing agent to saturation of the polymer melt occurs in the second zone,
   d. moulding of the polymer melt in the die and subsequent foaming of the moulded polymer melt loaded with blowing agent, on exit of the polymer melt from the die, to give a foamed structure on account of the blowing agent contained in the polymer melt,
   e. cooling of the foamed structure until its solidification,

   whereby a pressure greater than the minimum pressure $p_{min}$ of 90 bar is set in the second zone of the extrusion device, and the polymer melt loaded with blowing agent produced in the second zone of the extrusion device has a solidification temperature, the method being **characterised in that**,

   - a blowing agent concentration is set that is at least equal to the critical minimum concentration for complete foaming, and
   - the foaming temperature is set to a value above the solidification temperature such that the porous polymer moulded body obtained has a porosity in the range between 40 and 90 vol.% and an open-cell pore structure with uniform cross-sectional distribution.

2. Method according to Claim 1, **characterised in that** the foaming temperature is set to a value that is at most 30% higher than the solidification temperature.

3. Method according to Claim 1, **characterised in that** the foaming temperature is set to a value that is 10 to 30% higher than the solidification temperature.

4. Method according to Claim 3, **characterised in that** the foaming temperature is set to a value that is 10 to 20% higher than the solidification temperature.

5. Method according to Claim 1, **characterised in that** the foaming temperature is set to a value 10 to 20% higher than the solidification temperature, such that the porous polymer moulded body obtained has an open-cell structure and a porosity in the range of 50 to 80 vol.%.

6. Method according to one or more of Claims 1 to 5, **characterised in that** the blowing agent is introduced into the first zone of the extrusion device at a pressure that is higher than that in the first zone of the extrusion device.

7. Method according to one or more of Claims 1 to 6, **characterised in that** the polymer melt loaded with blowing agent is mixed in the second zone by means of mixing elements.

8. Method according to one or more of Claims 1 to 7, **characterised in that** $CO_2$ is used as blowing agent.

9. Method according to one or more of Claims 1 to 8, **characterised in that** the die is conditioned to a die temperature that can be set independently of the foaming temperature and is higher than the foaming temperature.

10. Method according to Claim 9, **characterised in that** the die temperature is set to a value that is up to 20% higher than the foaming temperature.

11. Method according to one or more of Claims 1 to 10, **characterised in that** the pressure $p_{min}$ in the second zone of the extrusion device is at least 120 bar.

12. Method according to one or more of Claims 1 to 11, **characterised in that** the at least one thermoplastic polymer is at least one polyolefin.

13. Method according to one or more of Claims 1 to 12, **characterised in that** the at least one polyolefin is polypropylene.

14. Method according to one or more of Claims 1 to 13, **characterised in that** the foamed polymer moulded body is a solid fibre.

15. Method according to one or more of Claims 1 to 13, **characterised in that** the foamed polymer moulded body is a hollow fibre.

16. Method according to one or more of Claims 1 to 13, **characterised in that** the foamed polymer moulded body is a film.

17. Method according to one or more of Claims 1 to 16, **characterised in that** the foamed structure is broken up into foamed polymer particles.

18. Method according to one or more of Claims 1 to 16, **characterised in that** the foamed structure is granulated.

19. Foamed microporous polymer particles from at least one thermoplastic polymer with open-cell pore structure of uniform cross-sectional distribution, a porosity of 40 to 90 vol.% and an accessible proportion of pore volume of at least 0.75, whereby the cells constituting the open-cell pore structure have a mean cell size of between 1 and 100 $\mu$m.

20. Foamed microporous polymer particles according to Claim 19 with a porosity between 50 and 80 vol.%.

21. Foamed microporous polymer particles according to one or both of Claims 19 and 20, **characterised in that** the at least one thermoplastic polymer is at least one polyolefin.

22. Foamed microporous polymer particles according to Claim 21, **characterised in that** the at least one polyolefin is polypropylene.

23. Foamed microporous polymer particles according to one or more of Claims 19 to 22, **characterised in that** they have a mean particle size of 1 to 5 mm.

24. Foamed microporous polymer particles according to one or more of Claims 19 to 23, **characterised in that** they have a surface porosity of at least 25%.

25. Foamed microporous polymer particles according to one or more of Claims 19 to 24, **characterised in that** they have a characteristic loading time of <90 min.

**Revendications**

1. Procédé de fabrication d'un corps moulé en polymère microporeux transformé en mousse à partir d'au moins un polymère thermoplastique, qui comprend les étapes consistant à :

   (a) faire fondre le polymère thermoplastique au nombre d'au moins un, à une première valeur de température, dans une première zone d'un dispositif d'extrusion, et introduire un agent moussant sous pression par rapport à la masse fondue de polymère ainsi obtenue, dans cette première zone du dispositif d'extrusion,
   (b) alimenter la masse fondue de polymère se trouvant dans la première zone du dispositif d'extrusion avec l'agent moussant, et incorporer l'agent moussant au sein de la masse fondue de polymère en faisant agir un moyen de cisaillement et/ou un moyen de malaxage sur la masse fondue de polymère, en produisant ainsi en même temps une dissolution au moins partielle de l'agent moussant dans la masse fondue de polymère,

(c) transporter la masse fondue de polymère alimentée en agent moussant, au moyen d'un organe de transport couplé à un organe régulateur de pression, à travers une deuxième zone du dispositif d'extrusion située derrière la première zone, jusqu'à un outil de moulage placé au fond de cette deuxième zone, en réglant la température qui règne dans la deuxième zone à une deuxième valeur de température, appelée « température de moussage », qui est identique à la première valeur de température ou inférieure à celle-ci, en produisant ainsi dans la deuxième zone une dissolution de l'agent moussant jusqu'à saturation de la masse fondue de polymère,

(d) façonner la masse fondue de polymère dans l'outil de moulage et faire ensuite mousser la masse fondue de polymère ainsi façonnée et chargée d'agent moussant lors de son extraction hors de l'outil de moulage, en la transformant en une structure de mousse grâce à l'agent moussant contenu dans la masse fondue de polymère,

(e) faire refroidir la structure de mousse jusqu'à ce qu'elle se solidifie,

la pression régnant dans la deuxième zone du dispositif d'extrusion étant ajustée à une valeur supérieure à une pression minimale $p_{min}$ de 90 bars, et la masse fondue de polymère chargée d'agent moussant, préparée dans la deuxième zone du dispositif d'extrusion, présentant une température de solidification déterminée, lequel procédé est **caractérisé en ce que** :

- la concentration d'agent moussant est ajustée à une valeur qui est au moins égale à la valeur minimale critique de concentration permettant une transformation intégrale en mousse,
- et la température de moussage est ajustée à une valeur qui est supérieure à la température de solidification et telle que le corps moulé en polymère poreux ainsi obtenu présente une porosité de 40 à 90 % en volume et une structure poreuse à cellules ouvertes, répartie régulièrement sur la section transversale.

2. Procédé selon la revendication 1, **caractérisé en ce que** la température de moussage est ajustée à une valeur qui n'est pas supérieure de plus de 30 % à la température de solidification.

3. Procédé selon la revendication 1, **caractérisé en ce que** la température de moussage est ajustée à une valeur qui est supérieure de 10 à 30 % à la température de solidification.

4. Procédé selon la revendication 1, **caractérisé en ce que** la température de moussage est ajustée à une valeur qui est supérieure de 10 à 20 % à la température de solidification.

5. Procédé selon la revendication 1, **caractérisé en ce que** la température de moussage est ajustée à une valeur qui est supérieure de 10 à 20 % à la température de solidification et telle que le corps moulé en polymère poreux ainsi obtenu présente une structure à cellules ouvertes et une porosité de 50 à 80 % en volume.

6. Procédé selon une ou plusieurs des revendications 1 à 5, **caractérisé en ce que** l'agent moussant est introduit dans la première zone du dispositif d'extrusion à une pression qui est supérieure à la pression régnant dans cette première zone du dispositif d'extrusion.

7. Procédé selon une ou plusieurs des revendications 1 à 6, **caractérisé en ce que** la masse fondue de polymère alimentée en agent moussant est malaxée dans la deuxième zone par des éléments mélangeurs.

8. Procédé selon une ou plusieurs des revendications 1 à 7, **caractérisé en ce que** l'on utilise du dioxyde de carbone $CO_2$ comme agent moussant.

9. Procédé selon une ou plusieurs des revendications 1 à 8, **caractérisé en ce que** l'outil de moulage est stabilisé à une température de moule réglable indépendamment de la température de moussage et qui est supérieure à la température de moussage.

10. Procédé selon la revendication 9, **caractérisé en ce que** la température de moule est ajustée à une valeur qui est supérieure à la température de moussage dans une proportion atteignant 20 %.

11. Procédé selon une ou plusieurs des revendications 1 à 10, **caractérisé en ce que** la pression $p_{min}$ qui règne dans la deuxième zone du dispositif d'extrusion vaut au moins 120 bars.

**12.** Procédé selon une ou plusieurs des revendications 1 à 11, **caractérisé en ce que** le polymère thermoplastique au nombre d'au moins un est au moins une polyoléfine.

**13.** Procédé selon une ou plusieurs des revendications 1 à 12, **caractérisé en ce que** la polyoléfine au nombre d'au moins une est du polypropylène.

**14.** Procédé selon une ou plusieurs des revendications 1 à 13, **caractérisé en ce que** le corps moulé en polymère sous forme de mousse est un fil plein.

**15.** Procédé selon une ou plusieurs des revendications 1 à 13, **caractérisé en ce que** le corps moulé en polymère sous forme de mousse est un fil creux.

**16.** Procédé selon une ou plusieurs des revendications 1 à 13, **caractérisé en ce que** le corps moulé en polymère sous forme de mousse est une feuille.

**17.** Procédé selon une ou plusieurs des revendications 1 à 16, **caractérisé en ce que** la structure de mousse est fractionnée en particules de polymère sous forme de mousse.

**18.** Procédé selon une ou plusieurs des revendications 1 à 16, **caractérisé en ce que** la structure de mousse est réduite en granulés.

**19.** Particules de polymère microporeuses sous forme de mousse, constituées d'au moins un polymère thermoplastique et dotées d'une structure poreuse à cellules ouvertes, répartie régulièrement sur la section transversale, d'une porosité de 40 à 90 % en volume et d'une fraction accessible du volume poreux d'au moins 0,75, dont les cellules constituant la structure poreuse à cellules ouvertes ont une taille moyenne de 1 à 100 $\mu$m.

**20.** Particules de polymère microporeuses sous forme de mousse selon la revendication 19, présentant une porosité de 50 à 80 % en volume.

**21.** Particules de polymère microporeuses sous forme de mousse selon une ou plusieurs des revendications 19 et 20, **caractérisées en ce que** le polymère thermoplastique au nombre d'au moins un est au moins une polyoléfine.

**22.** Particules de polymère microporeuses sous forme de mousse selon la revendication 21, **caractérisées en ce que** la polyoléfine au nombre d'au moins une est du polypropylène.

**23.** Particules de polymère microporeuses sous forme de mousse selon une ou plusieurs des revendications 19 à 22, dont la taille moyenne de particule vaut de 1 à 5 mm.

**24.** Particules de polymère microporeuses sous forme de mousse selon une ou plusieurs des revendications 19 à 23, dont la porosité superficielle vaut au moins 25 %.

**25.** Particules de polymère microporeuses sous forme de mousse selon une ou plusieurs des revendications 19 à 24, dont le temps de remplissage caractéristique est inférieur à 90 minutes.

Fig. 1

EP 1 503 889 B1

**Fig. 2**

**Fig. 3**

**Fig. 4**

a)

b)

**Fig. 5**

**Fig. 6**

22

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9938604 A
- EP 0297744 A
- DE 2737745 C2
- DE 3205289 A
- EP 0133882 A
- WO 9855540 A
- US 5160674 A
- DE 4437860 A
- WO 0026006 A